# EUROPEAN PATENT SPECIFICATION

(11) **EP 1 554 729 B1**
(45) Date of publication and mention of the grant of the patent: **29.03.2006**
(21) Application number: 04783361.1
(22) Date of filing: 07.09.2004
(51) Int. Cl.: G11B 23/28, G11B 23/40, G11B 19/12, G11B 7/0045

(54) **OPTICAL DISK DRIVE MODIFIED FOR SPEED AND ORIENTATION TRACKING FOR APPLYING A LABEL**
FÜR GESCHWINDIGKEITS- UND ORIENTIERUNGSVERFOLGUNG MODIFIZIERTES OPTISCHES DISKETTENLAUFWERK ZUM ANBRINGEN EINES ETIKETTS
LECTEUR DE DISQUE OPTIQUE ASSURANT LE SUIVI DE LA VITESSE ET DE L'ORIENTATION PERMETTANT D'APPLIQUER UNE ETIQUETTE

(30) Priority: 12.09.2003 US 661722
(43) Date of publication of application: 20.07.2005
(73) Proprietor: Hewlett-Packard Development Company, L.P., Houston, Texas 77070 (US)
(72) Inventor: KOEGLER, John, M. III, Corvallis, Oregon 97330 (US); VAN BROCKLIN, Andrew, L., Corvallis, Oregon 97330 (US); HANKS, Darwin, Mitchel, Fort Collins, Colorado 80525 (US); MAGUIRE, Mark, T., Loveland, Colorado 80537 (US)
(74) Representative: Jackson, Richard Eric
(86) International application number: PCT/US2004/029077
(87) International publication number: WO 2005/031745

(56) References cited:
- WO-A-99/54141
- US-A1- 2002 126 617
- US-A1- 2002 191 517

## Description

### BACKGROUND

A CD has a long, spiraled data track, which may be approximately 3.5 miles in length. This continuous data track originates from the central portion of the disk and spirals to the outer portion of the disk. The data is formed by molding features on the top surface of a polycarbonate plastic disk. While the dimensions of such features may vary between CDs and DVDs, they may be approximately 0.5 to 1.2 microns across. The centerlines of adjacent rings of the long, continuous data spiral on the CD may be separated by approximately 1.6 microns. The data features within the continuous data spiral appear as "pits" when viewed from above, but are "bumps" when viewed from below. During the data-reading process, the bumps are viewed from below by the optical pick-up unit (OPU) of the optical disk drive. The upper surface of the polycarbonate plastic disk into which the pits are molded is covered with an aluminum layer, which in turn is covered with an acrylic layer, and ultimately, a label.

During the process of reading data off the CD, a drive motor spins the disk. The drive motor may precisely rotate the disk between 200 and 500 rpm, depending on if an outer or an inner portion of the spiral is being read, respectively. The angular speed at which data passes the OPU may be fine-tuned to maintain a consistent speed at which data is read by the OPU. For example, where data is being read at a rate which is too fast or slow, slight modifications to the spindle motor may be made in response, to more nearly approximate the desired rate of disk speed rotation. Such feedback can be used to gradually decrease the speed of disk rotation as locations on the track which are progressively further from the center of the disk are read.

A sled carrying the OPU, which typically includes a laser, a lens system and a sensor, moves from an inner location to an outer location, as data is read. A sled motor guides movement of the sled carrying the OPU so that the laser's beam can follow the spiral.data track molded into the CD from a position below the portion of the spiral being read. Due to the extremely small dimensions of the data elements within the spiral, the precision of the tracking mechanism is important.

The sled motor will not, without assistance, achieve the accuracy required to adequately position the OPU under the desired portion of the data spiral. Accordingly, tracking sensors provide constant feedback to the sled motor. The feedback may be based on the sensor's observation of the precise location of the data track spiral.

Even with the tracking sensors, the accuracy of the tracking mechanism may not be entirely adequate. To bring the accuracy of the OPU within even greater tolerances, deflection sensors may be needed, to coordinate the operation of a deflection mechanism by which the laser of the OPU may be deflected slightly. If required, the deflection mechanism may aim the laser at a slight angle, thereby compensating for slight errors in the position of the sled carrying the OPU. Because the deflection sensors and associated circuitry move elements having much less mass than the sled through much smaller distances, the deflection mechanism is able to fine-tune the operation of the OPU.

While the OPU is typically used to read data from the optical disk, recent advancements have allowed the OPU to apply an image to a label of a CD to which an appropriate coating has been applied to the label. The image may be applied by turning the CD up-side-down and placing it in the CD drive. Because the CD is up-side-down, the coating may be activated by contact of the laser within the OPU. Application of the laser activates chemicals contained within the coating to result in formation of the image.

Unfortunately, during the process of applying an image to the label, the OPU is difficult to position accurately. The tracking sensors and deflection sensors are not operable, due to the absence, on the label surface of the disk, of a spiraling data track of the type that these sensors were designed to sense. Accordingly, the angular speed of disk rotation and the angular orientation of the disk are difficult to know and control with precision. As a result, any image applied by the OPU to the label surface may be distorted and flawed, or the resolution of the image may be less than desired, or both.

DVDs are similarly constructed, but typically have several layers of polycarbonate plastic upon which several layers of data are molded. Accordingly, application of an image to a label on a DVD involves many of the same problems seen in applying an image to a label of a CD.
US-A-6020977 discloses an optical disk drive, comprising a spindle motor to turn an optical disk; an OPU to apply an image to a coating within a label region of the optical disk; and a spindle detector for deriving disk speed from the rotary shaft of the spindle.

### SUMMARY

An optical disk drive includes a spindle motor to turn an optical disk and an OPU configured to apply an image to a coating within a label region of the optical disk. An encoder is configured for tracking disk speed features on the optical disk in a region distinct from the label region defined on the disk. By tracking the disk speed features, the encoder obtains disk speed data for use in adjusting rotation of the motor spindle whilst applying the image to the label region.

### BRIEF DESCRIPTION OF THE DRAWINGS

The following detailed description refers to the accompanying figures. In the figures, the left-most digit(s) of a reference number identifies the figure (Fig.) in which the reference number first appears. Moreover, the same reference numbers are used throughout the drawings to reference like features and components.

Fig. 1 is an isometric view of an optical disk, showing exemplary disk speed features and disk angular orientation features.

Fig 2 is an orthogonal view of a second optical disk, showing further exemplary views of disk speed features and disk angular orientation features.

Fig. 3 is an enlarged view showing exemplary detail of a disk speed or an angular orientation feature having a "saw tooth" design.

Fig. 4 is a cross-section of the exemplary detail of Fig. 3, taken along the 4-4 lines of Fig. 3.

Fig. 5 is an enlarged view of a -second exemplary disk speed and/or angular orientation feature.

Fig. 6 is a cross-seefional view of the exemplary detail of Fig. 5, taken along the 6-6 lines of Fig. 5.

Fig. 7 is schematic view of an exemplary optical disk drive, particularly showing an encoder configured to read the disk speed features and/or disk angular orientation features to allow calculation of disk speed and/or angular orientation, respectively.

Fig. 8 is flow chart showing an exemplary method by which an image may be applied to an optical disk configured with molded disk, speed features and/or angular orientation features using an exemplary optical disk drive having an encoder.

Fig. 9 is a flow chart showing an exemplary method by which an optical disk having disk speed features and/or angular orientation features may be constructed.

### DETAILED DESCRIPTION

An optical disk is configured to allow application of an image to a label side of the disk. The disk includes features, which may be molded, silk screened or otherwise formed or applied, which provide disk orientation (i.e. the way the label side of the disk is oriented within an optical drive), rotational speed and angular orientation information (i.e. the direction a ray originating from the center of the disk and passing through a given point on the perimeter of the disk is pointed within the disk drive) during the image application process. The optical disk drive contains an encoder which monitors the features, thereby initially detecting disk orientation, and subsequently monitoring disk speed and angular orientation, thereby assisting in the application of the image to the label surface of the optical disk. In one exemplary implementation, disk speed relative to the OPU (i.e. the speed at which the media passes the OPU (optical pickup unit), resulting in a constantly varying RPM as the OPU moves radially outward) is held at 0.25 meters/second, to within +/- 0.02%, by a spindle motor. This allows image application with quarter-pixel precision at 600 dpi (dots per inch) yielding an effective resolution of 2400 dpi. In part because of spindle motor quality issues, and in part because the disk speed relative to the OPU is a function of the radial distance of the OPU, adjustments to the spindle motor may be required at intervals during each revolution to maintain the precision required.

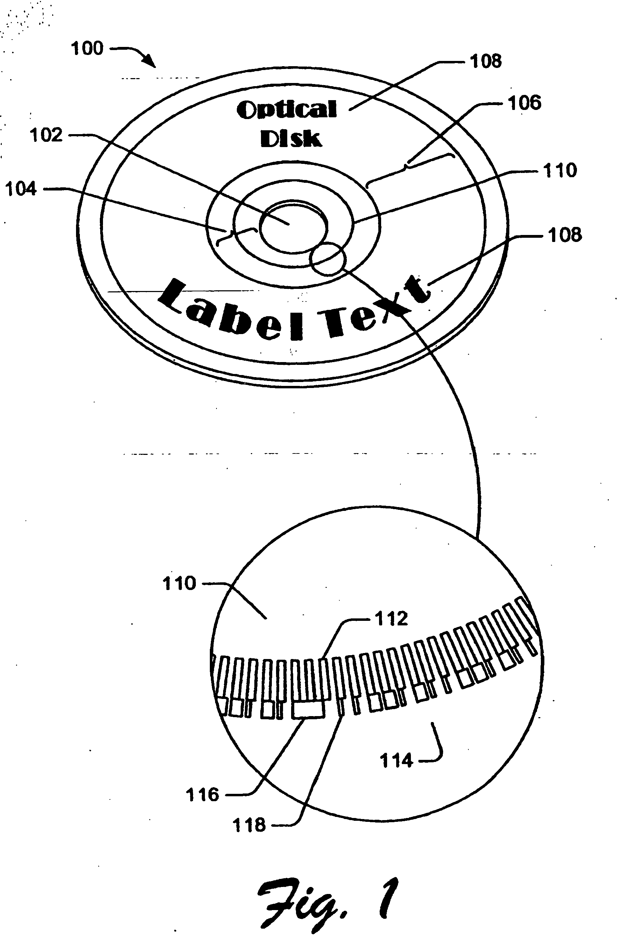

Fig. 1 is an isometric view of a first exemplary optical disk 100 configured for application of an image to an image or label side (generally, the side opposite a data side) of the disk. The disk 100 may be a CD, DVD or similar optical disk. A central hole 102 is surrounded by a region 104, which may or may not have mirrored appearance, depending on the manufacturing process. A label region 106 is coated with a material that is OPU-writable (i.e. writeable by an optical pick-up unit, as will be seen in greater detail, below). An image 108, such as text or graphics, may be applied to the label region 106 during the labeling process.

The labeling process can include reading features 110, which first provide information on disk orientation (i.e. which way is a given planar surface of the disk oriented within the disk drive), and then provide information on disk speed (angular or rotational speed, i.e. RPM) and disk angular orientation. In the exemplary optical disk 100, the features 110 are defined to allow observation while applying an image to the label side of the disk. Typically, the features are on the label side of the disk; however in alternate configurations, the features 110 could be defined on the data side of the disk, or on layers within the interior of the disk.

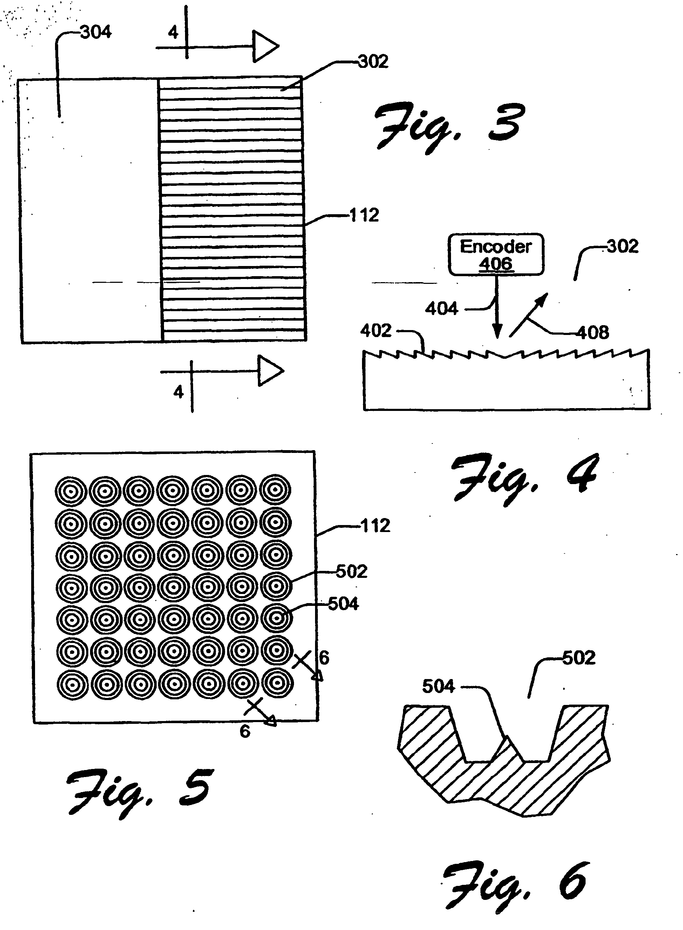

The features 110 of the exemplary optical disk 100 include a ring of disk speed features 112. When detected by an encoder (as will be seen below) the disk speed features 112 provide information on the speed of rotation of the optical disk 100. In the exemplary optical disk 100, the disk speed features 112 include molded areas spaced at intervals to provide a regular pattern of higher and lower light reflectivity. Exemplary detail of the structure of the molded disk speed features 112 is seen in Figs. 3-6. and will be discussed in greater detail, below. In one implementation, the disk speed features 112 are molded; in other implementations, the features could be printed, silk-screened onto the disk, or otherwise manufactured.

The features 110 of the exemplary optical disk 100 also include disk angular orientation features 114. When detected by an encoder (as will be seen below) the disk angular orientation features 114 provide information on the angular orientation (i.e. which direction a ray originating in the center of the disk and passing through a given point on the perimeter of the disk is pointed) of the optical disk 100 during rotation. The angular orientation of the disk is important as the image 108 is applied to the label region 106, since information about the angular orientation of the disk implies information about the angular orientation of the label region 106 during the image application process. In the exemplary disk 100, the disk angular orientation features 114 include molded areas spaced at intervals to provide an irregular pattern of higher and lower light reflectivity. Exemplary detail of the structure of molded features is seen in Figs. 3-6, and will be discussed in greater detail, below. Alternatively, the features 114 could be silk-screened or printed onto the disk, or otherwise manufactured.

The exemplary disk angular orientation features 114 of optical disk 100 include a larger feature 116 and smaller features 118 separated by flat, light-reflective areas of varying size. Because the pattern is irregular, and/or not symmetric about a number of radial axes, it is possible to determine the angular orientation of the disk 100 as it turns within an optical disk drive by observing the features 114. For example, where a single larger feature 116 and a plurality of smaller features 118 are present, the angular orientation of the disk may be readily determined.

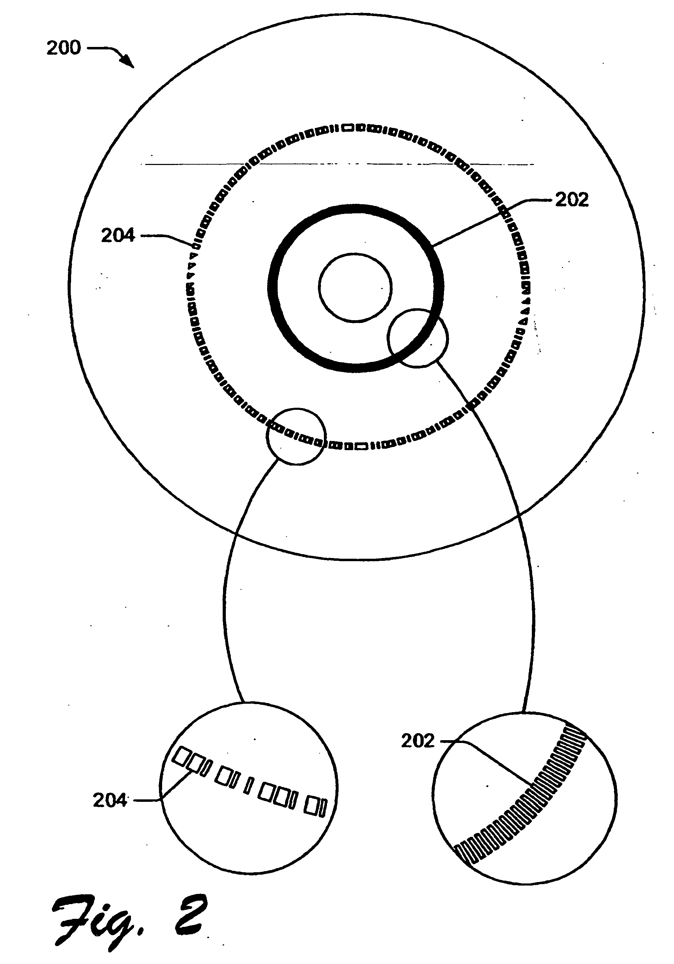

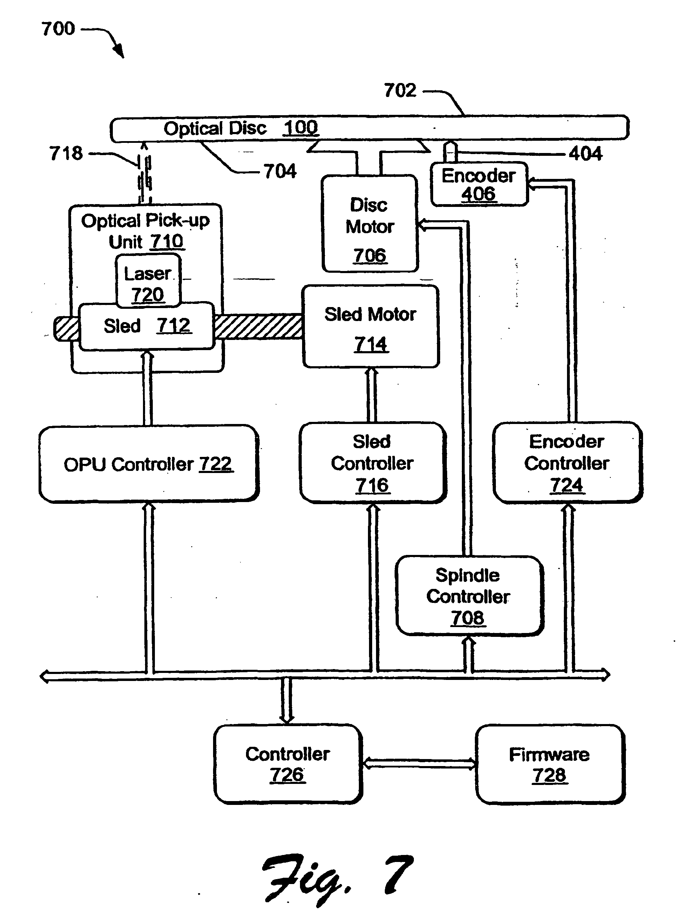

Fig. 2 is an orthogonal view of a second optical disk 200, showing further exemplary views of disk speed features 202 and disk angular orientation features 204. The disk angular orientation features 204 of the second disk 200 are typically suited for application to a DVD. In this case, the disk speed features 202 could be read by the encoder 406 (Fig. 4) and the disk angular orientation features 204 are readable by an OPU 710 (optical pick-up unit) of the optical disk drive 700 (as will be seen in the discussion of Fig. 7).

The disk speed features 202 are similar to the disk speed features 112 (Fig. 1), but may be molded on an inner layer of a multilayered DVD disk. The disk angular orientation features 204 may be similarly molded or made by a silk-screening or similar manufacturing process. The disk angular orientation features 204 may be annularly distributed at a location any desired radial distance, from the center of the optical disk 200, radially inside or outside the disk speed features. While Figs. 1 and 2 provide exemplary disk speed and disk angular orientation features, other implementations are possible. For example, the disk speed features and disk angular orientation features may be combined into an annular ring of features having information present in both 202, 204.

Fig. 3 is an enlarged view showing detail of a first exemplary molded disk speed feature (e.g. 112 from Fig. 1) or a molded disk angular orientation feature (e.g. 116 or 118 from Fig. 1). For example, the exemplary molded features can resemble a saw tooth region 302, as shown. The saw tooth region 302 tends to disperse light, thereby greatly lessening the amount of reflected light. In contrast, a reflective region 304, having a planar surface, reflects light. The contrast between the amount of light reflected allows a sensor to distinguish between the saw tooth region 302 and the reflective region 304, as will be seen in greater detail below.

Fig. 4 shows a cross-sectional view of the saw tooth region 302 originally seen in Fig. 3. Such a saw tooth region may be used to form exemplary the molded disk speed or angular orientation features, such as the molded features 112, 116 or 118 of Fig. 1. Surfaces 402 of the saw tooth are not perpendicular to incoming light 404 sent by a sensor or encoder 406, and therefore tend to send reflected light 408 away from the encoder.

The sensor or encoder 406 of Fig. 4 may be based on optical, magnetic or other technology. In one implementation, the encoder 406 is configured to direct light at the optical disk 100, and to distinguish between less reflective regions such as the saw tooth surface 302 of a disk speed feature 112 and such as the molded disk angular orientation features 116, 118, and more reflective regions 304 adjacent or between these features. In one implementation, the encoder 406 may be located a fixed radial distance from the center of the disk 100, separate from a region which is readable and/or writeable by an optical pickup unit (OPU) (see Fig. 7). The encoder 406 may send conventional (i.e. incoherent, non-collimated, non-laser) light 404 or a laser (i.e. coherent, collimated light) at the surface of the disk 100, which is returned to the encoder upon reflection by the reflective surface 304, but wherein the reflection 408 is not substantially returned to the encoder 406 by the saw tooth region 302.

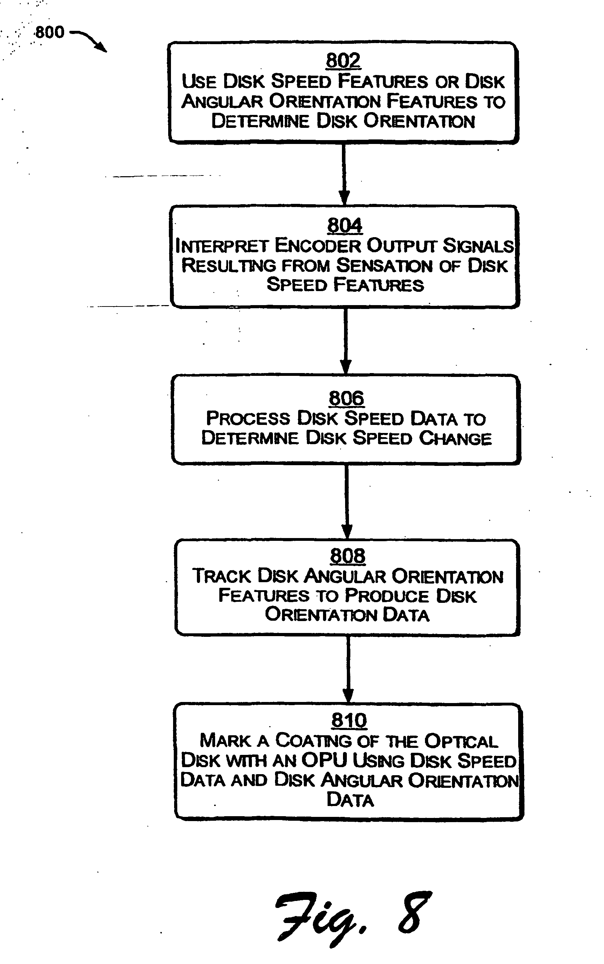

Figs. 5 and 6 are schematics showing enlarged structural detail of a second exemplary molded disk speed or angular orientation feature 502, a plurality of which would be suitable for formation of features 112, 116, 118. The molded feature 502 may be defined within polycarbonate plastic forming a layer within a CD or DVD. The molded feature 502 may be a "pit" having a non-planar surface or light-deflecting feature 504 for deflection of light In the example of Figs. 5 and 6, the light-deflecting feature 504 within the pit is a cone, but an alternate structure having a surface that is not perpendicular to incoming light could be substituted. The molded feature 502 (pit) may be scanned by an encoder 406 (as will be seen again in the discussion of Fig. 7), which sends light into the molded feature 502. Because the light-deflecting feature 504 does not reflect the light back to the encoder 406, the encoder signals a processor or controller accordingly.

Fig. 7 is schematic view of an exemplary optical disk drive 700, particularly showing an encoder 406 configured to read molded disk speed features 112 (Fig. 1) to allow calculation of disk speed. The encoder 406 may additional be configured to read the disk angular orientation features 114 (Fig. 1). Alternatively, the OPU 710 may be used to read molded or silk-screened disk angular orientation features 204 (Fig. 2) located within a range within which the OPU may be operated, as seen below.

A disk 100 having an information side 702 is oriented to position the label side 704 for marking. The disk 100 is rotated by a disk or spindle motor 706, which is controlled by the spindle controller 708. An image is applied to the label area 106 (Fig. 1) of the disk 100 by an OPU 710 (optical pick-up unit). The OPU 710 is moved radially over the label area 106 on a sled 712 moved by a sled motor 714 and sled controller 716 or switching device. The image is applied to the label region 106 by the laser beam 718, which reacts the coating to form the image. A laser 720 producing the laser beam 718 is controlled by a controller 722 or similar switching device.

In the exemplary optical disk drive 700, the encoder 406 is typically able to read information on the disk that is radially inside or outside a region readable by the OPU (optical pick-up unit) 710. For example, the encoder 406 can read data features 110 (Fig. 1) which represent disk speed features and/or disk angular orientation features. Advantageously, the -encoder 406 can read data from a first location on the optical disk 100 at the same time that the OPU 710 is reading or writing data on another part of the optical disk 100.

The encoder 406 reads data by sending light 404 (Fig. 4) to distinguish areas of molded features from areas without molded features by distinguishing between the quantities of reflected light. Exemplary molded features that may be read by the encoder are seen in Figs. 1-6. The reading process results in signals conveying disk orientation information, as well as disk speed and angular orientation information. The signals may be interpreted by an encoder controller 724, or transferred directly to a controller 726.

The controller 726 may execute software or firmware 728 to control the overall operation of the OPU 710, sled motor 714, spindle motor 706 and encoder 406. Firmware 728 code may configure the encoder 406 to read the molded disk speed features 112 and/or molded disk angular orientation features 114. Firmware code may also enable the OPU 710 to read disk angular orientation features 204 that are molded, printed and/or silk-screened onto the disk, typically within the label region 106.

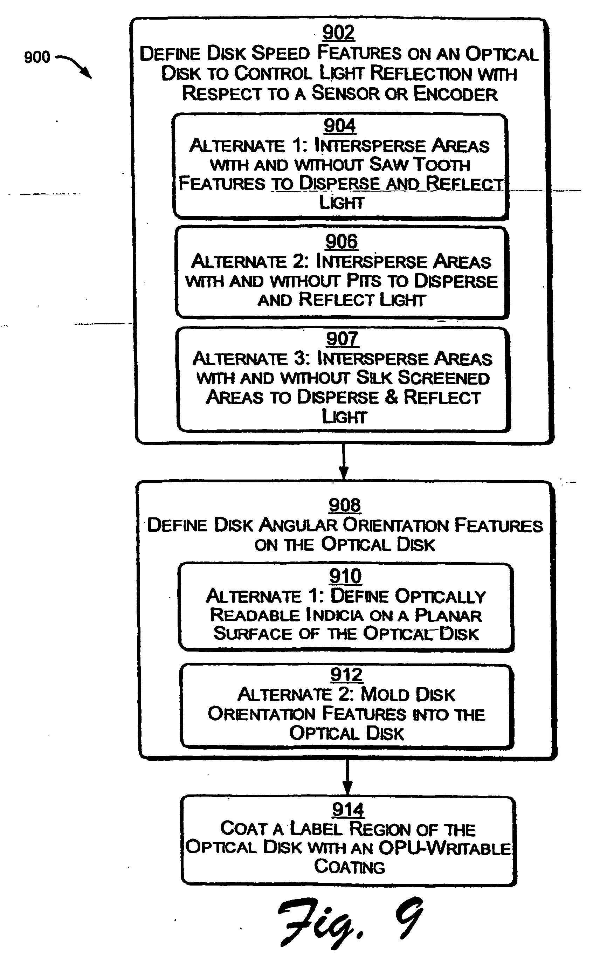

Fig. 8 is flow chart showing an exemplary method 800 by which an image may be applied to an optical disk 100 configured with molded and/or silk-screened features 110 (or 202, 204, etc.) to convey disk orientation information, disk speed information and/or disk angular orientation information using an exemplary optical disk drive having an encoder 406. The elements of method 800 may be implemented by a control procedure contained within firmware 728, or by other software executed by controller or processor 726. At block 802, disk speed features and/or disk angular orientation features are detected by an encoder 406 and/or an OPU 710. The detection of these features can be used to determine if the disk 100 is orientated properly in the optical disk drive 700, or whether the user should be asked to flip the disk over. At block 804, encoder output signals resulting from sensation of molded disk speed features 112 are interpreted, thereby producing disk speed data. The encoder 406 senses light reflected or not reflected from areas without and with disk speed features, and creates signals in response to the reflection detected or not detected. At block 806, the interpreted disk speed signals, i.e. the disk speed data, are used to increase or decrease disk speed by sending appropriate instructions to the disk motor 706. In general, where the OPU 710 is further from the center of the disk, the angular speed of the disk is maintained at a slower rate. Additionally, the interpreted disk speed signals are also used to determine OPU 710 operation during the label marking process. At block 808, disk angular orientation features 114 are tracked to produce disk angular orientation data. The disk angular orientation data, which provides information on the disk's angular orientation at any time, is used in the label marking process. The disk angular orientation features may be molded features 114 or possibly silk-screened features 204. The disk angular orientation features may be tracked by either the encoder 406 or the OPU 710. Blocks 806 and 808 define the functionality of a control procedure, typically located within firmware 728, which coordinates disk speed data from the encoder with the OPU during application of the image. At block 810, a coating on the label side of the optical disk is marked by the OPU 710. Laser light from the OPU 710 marks the coating by creating a reaction stimulated by heat and/or light exposure. The OPU uses the disk speed information from observation of the disk speed features 112 and disk angular orientation information from observation of the disk angular orientation features 114 to determine the correct times to turn on and off the laser 720 of the OPU, as well as to determine the correct operation of the sled motor 714 controlling the location of the OPU 710.

Fig. 9 is a flow chart showing an exemplary method 900 by which an optical disk 100 having disk speed features 112 and disk angular orientation features 114 may be constructed. The elements of method 900 may be implemented manually, or by a control procedure contained within software or firmware within a manufacturing facility. At block 902, disk speed features 112 are defined on an optical disk, typically to be read from a label side of the optical disk. Where the optical disk is multi-layered, such as a DVD. the disk speed features may be molded into an internal layer. In a first alternative, seen at block 904, the disk speed features 112 may be molded in the form of saw tooth features (e. g. 302 of Figs. 3 and 4). In a second alternative, seen at block 906, molded pits (e.g. 502 of Figs. 5 and 6) are interspersed with areas without molded features. In a third alternative, seen at block 907, silk screened areas are interspersed with area having no silk screen markings or features.

At block 908, disk angular orientation features, 114, 204 or similar, are defined, typically to be readable from the label side of the disk. In a first alternative, seen at block 910, optically readable indicia, such as silk-screened markings resembling features 204 may be defined, typically on an outer layer of the disk. In a second alternative, seen at block 912, disk angular orientation features are molded into the optical disk. For example, the disk angular orientation features 114, 204 may be molded into inner or outer layers of a DVD disk, or may be molded into a radially inner location in a CD or DVD disk for reading by the encoder 406.

At block 914, the label region of the label side of the optical disk may be coated with an OPU-writable material. For example, a thermally reactive coating may be applied, thereby allowing the OPU to apply an image by reacting the coating.

Although the disclosure has been described in language specific to structural features and/or inethodological steps, it is to be understood that the appended claims are not limited to the specific features or steps described. Rather, the specific features and steps are exemplary forms of implementing this disclosure. For example, while actions described in blocks of the flow diagrams may be performed in parallel with actions described in other blocks, the actions may occur in an alternate order, or may be distributed in a manner which associates actions with more than one other block. And further, while elements of the methods disdosed are intended to be performed in any desired manner, it is anticipated that computer- or processor-readable instructions, performed by a computer and/or processor, typically located within a printer, reading from a computer or processor-readable media, such as a ROM, disk or CD ROM, would be a preferred means of performing all or part of the methods. Additionally, while reference has been made to both CDs and DVDs, most of the elements described herein apply to disks generally, and optical disks particularly. Accordingly, the references to CDs and DVDs are by way of example only; such examples being are representative of larger and more general concepts, typically involving variations on, and/or improvements of, any type of disk, such as an optical disk (e.g. CD or DVD). And also, while disk speed features 112 and disk angular orientation features 114 have been illustrated as distinct markings, they could be combined, if desired, in some implementations. Such a combination may be more efficient in some applications.

## Claims

1. An optical disk drive (700), comprising:
a spindle motor (706) to turn an optical disk (100);
an OPU (710) to apply an image (108) to a coating within a label region (106) of the optical disk (100); and
an encoder (406), configured to track disk speed features (112) on the optical disk (100) in a region distinct from the label region (106) and to thereby obtain disk speed data to be used for adjusting rotation of the motor spindle during production of an image (108).

2. The optical disk drive (700) of claim 1, wherein the encoder (406) is additionally configured to track disk angular orientation features (114) molded within the region distinct from the label region (106).

3. The optical disk drive (700) of claim 1, wherein the OPU (710) is additionally configured to track disk angular orientation (114) features defined within the label region (106).

4. The optical disk drive (700) of claim 1, additionally comprising a control procedure (728) to coordinate disk speed data from the encoder (406) with the OPU (710) during application of the image (108).

5. A processor-readable medium comprising processor-executable instructions for labeling an optical disk (100), the processor-executable instructions comprising instructions for
controlling a spindle motor (706) within an optical disk drive (700) to regulate angular speed of the optical disk (100);
interpreting output signals of an encoder (406) resulting from sensation of disk speed features (112) defined on the optical disk (100) as the optical disk (100) is spun by the spindle motor to produce disk speed data; and
marking a coating on the optical disk (100) with an OPU (710), wherein the OPU (710) is operated according to the disk speed data.

6. A processor-readable medium as recited in claim 5, comprising further instructions for:
tracking disk angular orientation features (114) with the OPU (710) to produce disk angular orientation data; and
marking the coating using the disk angular orientation data.

7. A processor-readable medium as recited in claim 5, comprising further instructions for:
tracking disk angular orientation features (114) with the encoder (406) to produce disk angular orientation data; and
marking the coating using the disk angular orientation data.

8. A processor-readable medium as recited in claim 5, wherein the controlling comprises instructions for:
processing the disk speed data to determine times when speed of the spindle motor (706) should be increased and times when the speed of the spindle motor (706) should be decreased to maintain desired speed.

9. A processor-readable medium as recited in claim 5. wherein the interpreting comprises instructions for:
distinguishing between first and second signals received from the encoder (406), wherein the first and second signals result from differences in light reflection corresponding to presence or absence of the molded disk speed features (112).

10. A processor-readable medium as recited in claim 5, wherein the interpreting comprises instructions for:
distinguishing between first and second signals received from the encoder (406), wherein the first signal results when light is reflected off a mirrored surface (104) and the second signal results when light is reflected by a saw tooth feature (302).

11. A processor-readable medium as recited in claim 5, wherein the interpreting comprises instructions for:
distinguishing between first and second signals received from the encoder (406), wherein the first signal results when light is reflected off a mirrored surface (104) and wherein the second signal results when light is reflected by a molded pit (502).

12. A processor-readable medium as recited in claim 5, wherein the interpreting comprises instructions for
distinguishing between the output signals, wherein the output signals are associated with levels of light reflectivity within a region defined on a mirror surface (104) adjacent to the coating on a label side (704) of the disk (100).

13. An optical disk drive (700), comprising:
means for controlling a rate at which a spindle motor (706) spins an optical disk (100);
means for gathering disk speed data by tracking disk speed features (112) defined on the optical disk (100) as the optical disk is spun by the spindle motor (706); and
means for labeling the optical disk (100) according to the disk speed data.

14. The optical disk drive (700) of claim 13, additionally comprising:
means for tracking, with an OPU (710), disk angular orientation data defined by disk angular orientation features (114); and
means for passing the disk angular orientation data to the means for labeling to create an image (108) having a desired angular orientation on a coating on the optical disk (100).

15. The optical disk drive of claim 13, additionally comprising:
means for tracking, with an encoder (406), molded disk angular orientation features (114) located radially inside an area on the optical disk (100) reachable by an OPU, to produce disk angular orientation data; and
means for using the disk angular orientation data when marking a coating on the optical disk (100).

16. The optical disk drive of claim 13, additionally comprising:
means for processing the disk speed data from an encoder (406) to determine times when speed of the spindle motor (706) should be increased and times when the speed of the spindle motor (706) should be decreased.

17. The optical disk drive of claim 13, wherein the means for gathering disk speed data comprises:
means for distinguishing between first and second signals received from an encoder (406), wherein the first and second signals result from differences in light reflection corresponding to presence or absence of the molded disk speed features (112).

18. The optical disk drive of claim 13, wherein the means for gathering disk speed data comprises:
means for distinguishing between first and second signals received from an encoder (406), wherein the first signal results when light is reflected off a mirrored surface (104) and the second signal results when light is reflected by a saw tooth feature (302).

19. The optical disk drive of claim 13, wherein the means for gathering disk speed data comprises:
means for distinguishing between first and second signals received from an encoder (406), wherein the first signal results when light is reflected off a mirrored surface (104) and wherein the second signal results when light is reflected by a molded pit (502).

20. The optical disk drive of claim 13, wherein the means for gathering disk speed data comprises:
means for distinguishing between encoder sensor outputs associated with levels of light reflectivity within a region defined on a mirror surface (104) adjacent to a coating on the disk (100).

## Patentansprüche

1. Ein Optikplattenlaufwerk (700), das folgende Merkmale aufweist:
einen Spindelmotor (706), um eine Optikplatte (100) zu drehen;
eine OPU (710), um ein Bild (108) auf eine Beschichtung innerhalb einer Etikettregion (106) der Optikplatte (100) aufzubringen; und
einen Codierer (406), der konfiguriert ist, um Plattengeschwindigkeitsmerkmale (112) an der Optikplatte (100) in einer Region, die zu der Etikettregion (106) unterschiedlich ist, zu verfolgen und **dadurch** Plattengeschwindigkeitsdaten zu erhalten, die zum Einstellen einer Drehbewegung der Motorspindel während einer Erzeugung eines Bilds (108) verwendet werden sollen.

2. Das Optikplattenlaufwerk (700) gemäß Anspruch 1, bei dem der Codierer (406) zusätzlich konfiguriert ist, um Plattenwinkelausrichtungsmerkmale (114) zu verfolgen, die innerhalb der Region geformt sind, die zu der Etikettregion (106) unterschiedlich ist.

3. Das Optikplattenlaufwerk (700) gemäß Anspruch 1, bei dem die OPU (710) zusätzlich konfiguriert ist, um Plattenwinkelausrichtungsmerkmale (114) zu verfolgen, die innerhalb der Etikettregion (106) definiert sind.

4. Das Optikplattenlaufwerk (700) gemäß Anspruch 1, das zusätzlich eine Steuerprozedur (728) aufweist, um während einer Aufbringung des Bilds (108) Plattengeschwindigkeitsdaten von dem Codierer (406) mit der OPU (710) zu koordinieren.

5. Ein prozessorlesbares Medium, das prozessorausführbare Anweisungen zum Etikettieren einer Optikplatte (100) aufweist, wobei die prozessorausführbaren Anweisungen Anweisungen aufweisen für ein:
Steuern eines Spindelmotors (706) innerhalb eines Optikplattenlaufwerks (700), um eine Winkelgeschwindigkeit der Optikplatte (100) zu regeln;
Interpretieren von Ausgangssignalen eines Codierers (406), die aus einer Erfassung von Plattengeschwindigkeitsmerkmalen (112) resultieren, die an der Optikplatte (100) definiert sind, wenn die Optikplatte (100) durch den Spindelmotor gedreht wird, um Plattengeschwindigkeitsdaten zu erzeugen; und
Markieren einer Beschichtung an der Optikplatte (100) mit einer OPU (710), wobei die OPU (710) gemäß den Plattengeschwindigkeitsdaten betrieben wird.

6. Ein prozessorlesbares Medium gemäß Anspruch 5, das ferner Anweisungen aufweist für ein:
Verfolgen von Plattenwinkelausrichtungsmerkmalen (114) mit der OPU (710), um Plattenwinkelausrichtungsdaten zu erzeugen; und
Markieren der Beschichtung unter Verwendung der Plattenwinkelausrichtungsdaten.

7. Ein prozessorlesbares Medium gemäß Anspruch 5, das ferner Anweisungen aufweist für ein:
Verfolgen von Plattenwinkelausrichtungsmerkmalen (114) mit dem Codierer (406), um Plattenwinkelausrichtungsdaten zu erzeugen; und
Markieren der Beschichtung unter Verwendung der Plattenwinkelausrichtungsdaten.

8. Ein prozessorlesbares Medium gemäß Anspruch 5, bei dem das Steuern Anweisungen aufweist für ein:
Verarbeiten der Plattengeschwindigkeitsdaten, um Zeitpunkte, wenn eine Geschwindigkeit des Spindelmotors (706) erhöht werden sollte, und Zeitpunkte, wenn die Geschwindigkeit des Spindelmotors (706) verringert werden sollte, zu bestimmen, um eine erwünschte Geschwindigkeit beizubehalten.

9. Ein prozessorlesbares Medium gemäß Anspruch 5, bei dem das Interpretieren Anweisungen aufweist für ein:
Unterscheiden zwischen einem ersten und einem zweiten Signal, die von dem Codierer (406) empfangen werden, wobei das erste und das zweite Signal aus Unterschieden bei einer Lichtreflexion resultieren, die einem Vorhandensein oder Nichtvorhandensein der geformten Plattengeschwindigkeitsmerkmale (112) entsprechen.

10. Ein prozessorlesbares Medium gemäß Anspruch 5, bei dem das Interpretieren Anweisungen aufweist für ein:
Unterscheiden zwischen einem ersten und einem zweiten Signal, die von dem Codierer (406) empfangen werden, wobei das erste Signal resultiert, wenn Licht von einer verspiegelten Oberfläche (104) weg reflektiert wird, und das zweite Signal resultiert, wenn Licht durch ein Sägezahnmerkmal (302) reflektiert wird.

11. Ein prozessorlesbares Medium gemäß Anspruch 5, bei dem das Interpretieren Anweisungen aufweist für ein:
Unterscheiden zwischen einem ersten und einem zweiten Signal, die von dem Codierer (406) empfangen werden, wobei das erste Signal resultiert, wenn Licht von einer verspiegelten Oberfläche (104) weg reflektiert wird, und das zweite Signal resultiert, wenn Licht durch eine geformte Vertiefung (502) reflektiert wird.

12. Ein prozessorlesbares Medium gemäß Anspruch 5, bei dem das Interpretieren Anweisungen aufweist für ein:
Unterscheiden zwischen den Ausgangssignalen, wobei die Ausgängssignale Pegeln eines Lichtreflexionsvermögens innerhalb einer Region zugeordnet sind, die an einer verspiegelten Oberfläche (104) benachbart zu der Beschichtung an einer Etikettseite (704) der Platte (100) definiert ist.

13. Ein Optikplattenlaufwerk (700), das folgende Merkmale aufweist:
eine Einrichtung zum Steuern einer Rate, mit der ein Spindelmotor (706) eine Optikplatte (100) dreht;
eine Einrichtung zum Sammeln von Plattengeschwindigkeitsdaten durch ein Verfolgen von Plattengeschwindigkeitsmerkmalen (112), die an der Optikplatte (100) definiert sind, wenn die Optikplatte durch den Spindelmotor (706) gedreht wird; und
eine Einrichtung zum Etikettieren der Optikplatte (100) gemäß den Plattengeschwindigkeitsdaten.

14. Das Optikplattenlaufwerk (700) gemäß Anspruch 13, das zusätzlich folgende Merkmale aufweist:
eine Einrichtung zum Verfolgen von Plattenwinkelausrichtungsdaten, die durch Plattenwinkelausrichtungsmerkmale (114) definiert sind, mit einer OPU (710); und
eine Einrichtung zum Weitergeben der Plattenwinkelausrichtungsdaten zu der Einrichtung zum Etikettieren, um ein Bild (108), das eine erwünschte Winkelausrichtung aufweist, an einer Beschichtung an der Optikplatte (100) zu erzeugen.

15. Das Optikplattenlaufwerk gemäß Anspruch 13, das zusätzlich folgende Merkmale aufweist:
eine Einrichtung zum Verfolgen von geformten Plattenwinkelausrichtungsmerkmalen (114), die radial im Inneren eines Bereichs an der Optikplatte (100) positioniert sind, der durch eine OPU erreichbar ist, mit einem Codierer (406), um Plattenwinkelausrichtungsdaten zu erzeugen; und
eine Einrichtung zum Verwenden der Plattenwinkelausrichtungsdaten bei einem Markieren einer Beschichtung an der Optikplatte (100).

16. Das Optikplattenlaufwerk gemäß Anspruch 13, das zusätzlich folgendes Merkmal aufweist:
eine Einrichtung zum Verarbeiten der Plattengeschwindigkeitsdaten von einem Codierer (406), um Zeitpunkte, wenn eine Geschwindigkeit des Spindelmotors (706) erhöht werden sollte, und Zeitpunkte, wenn die Geschwindigkeit des Spindelmotors (706) verringert werden sollte, zu bestimmen.

17. Das Optikplattenlaufwerk gemäß Anspruch 13, bei dem die Einrichtung zum Sammeln von Plattengeschwindigkeitsdaten folgendes Merkmal aufweist:
eine Einrichtung zum Unterscheiden zwischen einem ersten und einem zweiten Signal, die von einem Codierer (406) empfangen werden, wobei das erste und das zweite Signal aus Unterschieden bei einer Lichtreflexion resultieren, die einem Vorhandensein oder Nichtvorhandensein der geformten Plattengeschwindigkeitsmerkmale (112) entsprechen.

18. Das Optikplattenlaufwerk gemäß Anspruch 13, bei dem die Einrichtung zum Sammeln von Plattengeschwindigkeitsdaten folgendes Merkmal aufweist:
eine Einrichtung zum Unterscheiden zwischen einem ersten und einem zweiten Signal, die von einem Codierer (406) empfangen werden, wobei das erste Signal resultiert, wenn Licht von einer verspiegelten Oberfläche (104) weg reflektiert wird, und das zweite Signal resultiert, wenn Licht durch ein Sägezahnmerkmal (302) reflektiert wird.

19. Das Optikplattenlaufwerk gemäß Anspruch 13, bei dem die Einrichtung zum Sammeln von Plattengeschwindigkeitsdaten folgendes Merkmal aufweist:
eine Einrichtung zum Unterscheiden zwischen einem ersten und einem zweiten Signal, die von einem Codierer (406) empfangen werden, wobei das erste Signal resultiert, wenn Licht von einer verspiegelten Oberfläche (104) weg reflektiert wird, und das zweite Signal resultiert, wenn Licht durch eine geformte Vertiefung (502) reflektiert wird.

20. Das Optikplattenlaufwerk gemäß Anspruch 13, bei dem die Einrichtung zum Sammeln von Plattengeschwindigkeitsdaten folgendes Merkmal aufweist:
eine Einrichtung zum Unterschieden zwischen Codierersensorausgangssignalen, die Pegeln eines Lichtreflexionsvermögens zugeordnet sind, innerhalb einer Region, die an einer verspiegelten Oberfläche (104) benachbart zu einer Beschichtung an der Platte (100) definiert ist.

## Revendications

1. Lecteur de disque optique (700), comprenant :
un moteur à axe (706) pour faire tourner un disque optique (100) ;
une tête de lecture optique (OPU = Optical Pick-up Unit) (710) pour appliquer une image (108) sur un revêtement à l'intérieur d'une région d'étiquette (106) du disque optique (100) ; et
un encodeur (406), qui est configuré pour tracer des caractéristiques de vitesse de disque (112) sur le disque optique (100) dans une région distincte de la région d'étiquette (106) et pour obtenir de ce fait des données de vitesse de disque destinées à être utilisées pour réguler la vitesse de rotation de l'axe du moteur pendant la production d'une image (108).

2. Lecteur de disque optique (700) selon la revendication 1, dans lequel l'encodeur (406) est configuré en outre pour tracer des caractéristiques d'orientation angulaire de disque (114) qui sont moulées à l'intérieur de la région distincte de la région d'étiquette (106).

3. Lecteur de disque optique (700) selon la revendication 1, dans lequel la tête de lecture optique (OPU) (710) est configurée en outre pour tracer des caractéristiques d'orientation angulaire de disque (114) qui sont définies à l'intérieur de la région d'étiquette (106).

4. Lecteur de disque optique (700) selon la revendication 1, comprenant en outre une procédure de commande (728) pour coordonner des données de vitesse de disque de l'encodeur (406) avec l'OPU (710) pendant l'application de l'image (108).

5. Support lisible par un processeur comprenant des instructions exécutables par un processeur pour étiqueter un disque optique (100), les instructions exécutables par un processeur comprenant des instructions pour :
commander un moteur à axe (706) à l'intérieur d'un lecteur de disque optique (700) de manière à réguler une vitesse angulaire du disque optique (100) ;
interpréter des signaux de sortie d'un encodeur (406) provenant de la sensation des caractéristiques de vitesse de disque (112) définies sur le disque optique (100) lorsque le disque optique (100) est entraîné pour une rotation par le moteur à axe, de manière à produire des données de vitesse de disque ; et
marquer un revêtement sur le disque optique (100) avec une OPU (710), dans lequel l'OPU (710) est amenée à fonctionner conformément aux données de vitesse de disque.

6. Support lisible par un processeur selon la revendication 5, comprenant en outre des instructions pour :
tracer des caractéristiques d'orientation angulaire de disque (114) avec l'OPU (710) pour produire des données d'orientation angulaire de disque ; et
marquer le revêtement en utilisant les données d'orientation angulaire de disque.

7. Support lisible par un processeur selon la revendication 5, comprenant en outre des instructions pour :
tracer des caractéristiques d'orientation angulaire de disque (114) avec l'encodeur (406) pour produire des données d'orientation angulaire de disque ; et
marquer le revêtement en utilisant les données d'orientation angulaire de disque.

8. Support lisible par un processeur selon la revendication 5, dans lequel la procédure de contrôle comprend des instructions pour :
traiter les données de vitesse de disque afin de déterminer à quel moment la vitesse du moteur à axe (706) doit être augmentée et à quel moment la vitesse du moteur à axe (706) doit être réduite de manière à maintenir une vitesse souhaitée.

9. Support lisible par un processeur selon la revendication 5, dans lequel la procédure d'interprétation comprend des instructions pour :
faire la différence entre des premier et deuxième signaux reçus de l'encodeur (406), dans lequel les premier et deuxième signaux résultent de différences dans le réfléchissement de la lumière correspondant à la présence ou à l'absence des caractéristiques de vitesse de disque moulées (112).

10. Support lisible par un processeur selon la revendication 5, dans lequel la procédure d'interprétation comprend des instructions pour :
faire la différence entre des premier et deuxième signaux reçus de l'encodeur (406), dans lequel le premier signal est délivré en sortie lorsque de la lumière est réfléchie à partir d'une surface miroir (104) et le deuxième signal est délivré en sortie lorsque de la lumière est réfléchie par une caractéristique en dents de scie (302).

11. Support lisible par un processeur selon la revendication 5, dans lequel la procédure d'interprétation comprend des instructions pour :
faire la différence entre des premier et deuxième signaux reçus de l'encodeur (406), dans lequel le premier signal est délivré en sortie lorsque de la lumière est réfléchie à partir d'une surface miroir (104) et le deuxième signal est délivré en sortie lorsque de la lumière est réfléchie par un creux moulé (502).

12. Support lisible par un processeur selon la revendication 5, dans lequel la procédure d'interprétation comprend des instructions pour :
faire la différence entre les signaux de sortie, dans lequel les signaux de sortie sont associés à des niveaux de réfléchissement de la lumière à l'intérieur d'une région qui est définie sur une surface miroir (104) adjacente au revêtement sur un côté d'étiquette (704) du disque (100).

13. Lecteur de disque optique (700), comprenant :
des moyens pour contrôler une vitesse à laquelle un moteur à axe (706) fait tourner un disque optique (100) ;
des moyens pour collecter des données de vitesse de disque en traçant des caractéristiques de vitesse de disque (112) qui sont définies sur le disque optique (100) lorsque le disque optique est entraîné pour une rotation par le moteur à axe (706) ; et
des moyens pour étiqueter le disque optique (100) conformément aux données de vitesse de disque.

14. Lecteur de disque optique (700) selon la revendication 13, comprenant en outre :
des moyens pour tracer, avec une OPU (710), des données d'orientation angulaire de disque qui sont définies par des caractéristiques d'orientation angulaire de disque (114) ; et
des moyens pour transmettre les données d'orientation angulaire de disque vers les moyens d'étiquetage de manière à créer une image (108) ayant une orientation angulaire souhaitée sur le revêtement sur le disque optique (100).

15. Lecteur de disque optique selon la revendication 13, comprenant en outre :
des moyens pour tracer, avec un encodeur (406), des caractéristiques d'orientation angulaire de disque moulées (114) disposées radialement à l'intérieur d'une zone sur le disque optique (100) pouvant être atteinte par une OPU, pour produire des données d'orientation angulaire de disque ; et
des moyens pour utiliser les données d'orientation angulaire de disque lors du marquage d'un revêtement sur le disque optique (100).

16. Lecteur de disque optique selon la revendication 13, comprenant en outre :
des moyens pour traiter les données de vitesse de disque d'un encodeur (406) pour déterminer à quel moment la vitesse du moteur à axe (706) doit être augmentée et à quel moment la vitesse du moteur à axe (706) doit être réduite.

17. Lecteur de disque optique selon la revendication 13, dans lequel les moyens pour collecter des données de vitesse de disque comprennent :
des moyens pour faire la différence entre des premier et deuxième signaux reçus d'un encodeur (406), dans lequel les premier et deuxième signaux résultent de différences dans le réfléchissement de la lumière correspondant à la présence ou à l'absence des caractéristiques de vitesse de disque moulées (112).

18. Lecteur de disque optique selon la revendication 13, dans lequel les moyens pour collecter des données de vitesse de disque comprennent :
des moyens pour faire la différence entre des premier et deuxième signaux reçus d'un encodeur (406), dans lequel le premier signal est délivré en sortie lorsque de la lumière est réfléchie à partir d'une surface miroir (104) et le deuxième signal est délivré en sortie lorsque de la lumière est réfléchie par une caractéristique en dents de scie (302).

19. Lecteur de disque optique selon la revendication 13, dans lequel les moyens pour collecter des données de vitesse de disque comprennent :
des moyens pour faire la différence entre des premier et deuxième signaux reçus d'un encodeur (406), dans lequel le premier signal est délivré en sortie lorsque de la lumière est réfléchie à partir d'une surface miroir (104) et le deuxième signal est délivré en sortie lorsque de la lumière est réfléchie par un creux moulé (502).

20. Lecteur de disque optique selon la revendication 13, dans lequel les moyens pour collecter des données de vitesse de disque comprennent :
des moyens pour faire la différence entre des signaux de sortie de détection reçus d'un encodeur, qui sont associés à des niveaux de réfléchissement de la lumière à l'intérieur d'une région définie sur une surface miroir (104) adjacente à un revêtement sur le disque (100).
